# EUROPÄISCHE PATENTSCHRIFT

(11) **EP 1 065 791 B1**
(45) Veröffentlichungstag und Bekanntmachung des Hinweises auf die Patenterteilung: **20.10.2004**
(21) Anmeldenummer: 00113828.8
(22) Anmeldetag: 29.06.2000
(51) Int. Cl.: H04B 1/38, G04B 47/00

(54) **Uhr mit transponder**
Wristwatch with transponder
Montre bracelet avec transpondeur

(30) Priorität: 29.06.1999 DE 19929295
(43) Veröffentlichungstag der Anmeldung: 03.01.2001
(73) Patentinhaber: POINT tec Electronic GmbH, 85737 Ismaning (DE)
(72) Erfinder: Kober, Horst, 85737 Ismaning (DE); Flaig, Jörg, 85737 Ismaning (DE); Birk, Wilhelm, 85737 Ismaning (DE)
(74) Vertreter: Hering, Hartmut, Dipl.-Ing.

(56) Entgegenhaltungen:
- EP-A- 0 366 875
- EP-A- 0 769 759
- EP-A- 0 960 995
- DE-A- 4 435 894
- DE-A- 19 613 491
- DE-U- 29 809 862

## Beschreibung

Die Erfindung betrifft von einem Anwender bei sich tragbare Vorrichtungen, wie Accessoires, insbesondere Uhren, wie Armbanduhren oder dergleichen. Natürlich kommen auch Schmuckgegenstände, Kofferanhänger, Zubehörteile oder ähnliches in Betracht. Nachstehend wird die Erfindung aber hauptsächlich in Verbindung mit einer Uhr, insbesondere einer Armbanduhr, näher erläutert, wobei aber keine Beschränkung hierin zu sehen ist.

Bei einer Uhr als Vorrichtung oder Accessoir umfaßt diese ein Gehäuse, ein Uhrwerk, eine Zeitanzeige und ein Schauglas. In einer solchen Uhr kann ein Transponder vorgesehen sein, welcher zur Wirkung kommt, wenn die Uhr an einem ortsfesten Sende- und Empfangsgerät vorbeigeführt wird, mit welchem der Transponder über ein magnetisches oder elektromagnetisches Feld drahtlos in Verbindung tritt zum Zwecke des Datenaustausches zwischen dem Chip des Transponders und dem ortsfesten Gerät. Der Datenaustausch hat eine bestimmte Wirkung, z.B. die, daß der Transponder dem Träger der Uhr den Zugang zu einem bestimmten Gebiet oder Raum ermöglicht.

Der Transponder ist fest in die Uhr eingebaut und bildet ein unverzichtbares Teil derselben. Daher sind solche Uhren nur auf jeweils einen bestimmten, von der Art des eingebauten Chips abhängigen Anwendungszweck abgestellt, z.B. für die Kontrolle des Zugangs zu einem Skigebiet.

Bisher am häufigsten sind jedoch Transponder nicht in Uhren, sondern in die üblichen, geldbörsengroßen Kunststoffkarten eingebaut. Dabei ist es auch schon bekannt, den Transponder in der Karte lesbar zu halten, so daß er aus der Karte vom Benutzer herausgenommen und wahlweise entweder in der Karte oder in einem anderen, dann als Träger dienenden Gerät benutzt werden kann.

DE 196 13 491 A zeigt eine Uhr mit Multifunktionsvorrichtung zur Aufnahme von Speichermedien, wobei Drucktasten beispielsweise zur Auswertung und zum Auslesen von gespeicherten Daten eingesetzt sind. DE 196 13 491 A betrifft keine Vorrichtung bzw. Uhr mit Transponder und dient dem Nachweis von Schaltelementen.

DE 298 09 862 U zeigt eine Transponder-Armbanduhr, die auch nachträglich noch zu einer Transponderuhr umgestaltet werden kann. Der Transponder weist eine Antenne und ein Chip-Modul auf, wobei das Chip-Modul in eine von außen zugängliche Aufnahme des Gehäuses für eine lösbare Halterung des Chip-Moduls am oder im Gehäuse eingesetzt werden kann. Bei der bekannten Transponder-Armbanduhr gibt es durch Vorsehen der Aufnahme am Gehäuse die Möglichkeit, ein Chip-Modul in die Aufnahme einzusetzen und auch wieder daraus zu entfernen. Jedoch ist es dabei nicht möglich, die Transponder-Armbanduhr durch verschiedene Funktionen "nachzurüsten", ohne dass das gesamte Chip-Modul ausgetauscht werden muss. Es ist beispielsweise nicht möglich, unter Beibehaltung des Chip-Moduls Einzelfunktionen, wie beispielsweise eine Bezahlmöglichkeit, in die Transponder-Armbanduhr zu integrieren. Es müsste für eine zusätzliche Einzelfunktion der gesamte Chip-Modul neu entwickelt werden und dann mit dem Modul in der Aufnahme ausgetauscht werden.

Ausgehend von diesem Stand der Technik liegt der Erfindung die Aufgabe zugrunde, eine von einem Anwender bei sich tragbare Vorrichtung derart weiterzubilden, dass sie in Bezug auf ihre Funktionen flexibler wird und vielfältiger als entsprechende bekannte Vorrichtungen einsetzbar ist. Die Flexibilität soll dabei auf möglichst einfache und kostengünstige Weise erreicht werden.

Diese Aufgabe wird durch eine Anwender bei sich tragbare Vorrichtung gemäß Patentanspruch 1 gelöst. Erfindungsgemäß ist die Chipeinrichtung in Module aufgeteilt, die miteinander in Wirkverbindung stehen. Ein Modul, nämlich das Modul mit Antenne und einer Verbindung zur Anzeigeeinrichtung, steht dabei in elektrischer Wirkverbindung mit einem von außerhalb des Gehäuses manuell betätigbaren Schaltelement und ermöglicht ein Anzeigen von Zusatzfunktionen zusätzlich zu Hauptfunktionen über eine Kontaktierungsvorrichtung zu der Anzeigeeinrichtung. Durch das Vorsehen von sowohl einer Antenne als auch einem Schaltelement ist vorteilhafterweise eine kontaktierende und eine berührungslose Steuerung des Chip-Moduls möglich. Weiterhin können weitere separate Module vorgesehen werden, die über Kontaktelemente und auch über Kontaktstiften mit dem anderen Modul, das schon in der Aufnahme eingesetzt sein kann, in Verbindung gebracht werden können. Diese separaten Module weisen beispielsweise eine Schreib/Lese-Elektronik zu einer Funktionsauswertung und/oder ein Uhrwerk zur Zeitanzeige auf.

Durch das separate Vorsehen von Modulen ergibt sich erfindungsgemäß der Vorteil, dass Module mit Einzelfunktionen auf einfache Weise zu Modulen, die schon in die Aufnahme eingesetzt sind, hinzugefügt oder von diesen entfernt werden können, ohne dass die anderen auf anderen Modulen vorgesehenen Einzelfunktionen dadurch beeinflusst werden. Insbesondere das Modul mit Antenne und Verbindung zum Schaltelement muss nicht laufend neu entwickelt und ein- und/oder ausgebaut werden.

Die abhängigen Patentansprüche 2 bis 12 zeigen vorteilhafte Weiterbildungen der von einem Anwender bei sich tragbaren Vorrichtung gemäß Patentanspruch 1.

Nach der Erfindung werden Vorrichtungen oder Accessoires bereitgestellt, bei denen es sich insbesondere um Uhren, wie Armbanduhren oder dergleichen, handeln kann, und deren nähere Einzelheiten in den Ansprüchen angegeben sind.

Obgleich sich die nachstehenden Ausführungen auf eine Uhr beziehen, lassen sich die dort näher beschriebenen Einzelheiten natürlich auch bei anderen Vorrichtungen verwirklichen.

Bei einer Uhr als Vorrichtung oder Accessoir ist der Transponder nicht fest eingebaut. Vielmehr ist eine Aufnahme am oder im Gehäuse so gestaltet, daß zumindest das Chip-Modul des Transponders vom Benutzer ausgewechselt werden kann. Dadurch wird es möglich, je nach verwendetem Chip-Modul, die unterschiedlichsten zusätzlichen Funktionen zu realisieren, indem jeweils das Chip-Modul eingesetzt und verwendet wird, welches für die gewünschte Funktion ausgelegt ist. Auch ist es ohne weiteres möglich, in Zukunft andere weiterentwickelte Chip-Module, einschließlich solchen mit Mobiltelefonfunktion einzusetzen.

Allerdings können manche Funktionen nicht allein durch das Zusammenwirken zwischen Chip-Modul und ortsfestem Gerät realisiert werden. Vielmehr ist die aktive Mitwirkung des Benutzers erforderlich. Diese wird bei der Erfindung durch das von außerhalb des Gehäuses manuell betätigbare elektrische Schaltelement ermöglicht, das über elektrische Kontaktelemente und über eine in elektrisch getrennte Abschnitte unterteilte elektrische Kontaktfläche am Chip-Modul mit dem Chip in elektrischer Wirkverbindung steht. So ist es z.B. bei einer Bezahl-Funktion notwendig oder zumindest dringend erwünscht, daß der Benutzer den Bezahl-Vorgang, bei welchem ein bestimmter Geldbetrag von einem im Chip gespeicherten Guthaben abgezogen wird, aktiv auslöst. Andernfalls könnte Geld vom Guthaben ohne Zustimmung und ohne Wissen des Benutzers abgebucht werden. Durch Betätigung des Schaltelementes kann der Benuzter seine Zustimmung bequem und auf einfache Weise über das Chip-Modul nach außen mitteilen.

Zur Betätigung des elektrischen Schaltelementes kann ein vorhandenes Bedienungselement beispielsweise der Uhr mitbenutzt werden, z.B. das Kronrad. Es kann aber auch ein gesondertes Bedienungselement, vorzugsweise an der Seitenwand des Gehäuses, vorgesehen sein. Es ist aber auch ein rein elektrisches Schaltelement denkbar, das z.B. druck- oder lichtempfindlich ist und vorzugsweise am Schauglas der Uhr betätigt wird.

Alternativ oder zusätzlich zu dem mindestens einen elektrischen Schaltelement kann beispielsweise bei einer Uhr eine durch das Schauglas sichtbare elektronische Anzeige vorgesehen sein, die mit den gleichen Mitteln wie das Schaltelement mit dem Chip im Chip-Modul elektrisch zusammenwirkt und dazu dient, bestimmte Informationen, die im Chip-Modul gespeichert sind, für den Benutzer sichtbar zu machen. So läßt sich auf dieser Anzeige z.B. ein noch vorhandenes Geld-Guthaben anzeigen oder die Zeitdauer, für die eine bestimmte Zugangsberechtigung gegeben wurde. In Verbindung hiermit kann das Schaltelement auch in der Weise eingesetzt werden, daß die Anzeige je nach Betätigung des Schaltelementes unterschiedliche Daten aus dem Chip-Modul anzeigt und auch ganz abgeschaltet ist.

In der Regel wird man für ein komplexeres Zusammenwirken zwischen Chip-Modul, dem mindestens einen Schaltelement und der elektrischen Anzeige in der Uhr gemäß Anspruch 3 eine Schnittstellenschaltung vorsehen, wobei sich z. B. die Platine des Uhrwerkes der Uhr als Träger für diese Schnittstellenschaltung anbietet.

Wie schon ausgeführt, tritt der Transponder nach außen zu den ortsfesten Geräten über seine Antenne drahtlos in Verbindung. Die Kontaktierung des Chip-Moduls mittels elektrischer Kontaktelemente ist nur für die elektrischen Verbindungen mit dem Chip im Inneren der Uhr vorgesehen, weil sich so die elektrische Verbindung im Inneren der Uhr am leichtesten realisieren läßt, wenn auch theoretisch andere Verbindungsarten, z.B. eine Infrarot-Strecke oder eine induktive Kopplung, denkbar sind. Die mechanische Kontaktierung macht sich den Umstand zunutze, daß praktisch alle üblichen Chip-Module mittels einer modulseitigen Kontaktfläche für eine mechanische Kontaktierung eingerichtet sind, damit sich die Chip-Module zusammen mit einer Antenne nicht nur drahtlos nutzen lassen, sondern auch in den zahlreich vorhandenen traditionellen Geräten benutzt werden können, die kontaktgebunden arbeiten.

Die für die drahtlose Kommunikation notwendige Antenne kann in das Chip-Modul eingebaut sein. Solche Chip-Module, sogenannte Transponder, sind an sich bekannt. Bei der Erfindung kann ein Einbau der Antenne in das Gehäuse gemäß Anspruch 4 erfolgen, weil dann z. B. die Abmessungen der Antenne größer sein können, was die Reichweite und Sicherheit der Datenübertragung begünstigt.

Vorzugsweise befindet sich die Antenne auf der Oberseite des Gegenstands, wie bei einer Uhr auf ihrer Oberseite, unter dem Schauglas, um die Abschirmung durch ein Metallgehäuse oder gegebenenfalls das Uhrwerk möglichst klein zu halten. Die Integration der Antenne in ein Ziffernblatt ist in diesem Sinne besonders günstig.

Eine besonders bevorzugte Weiterbildung der Erfindung ist im Anspruch 5 in Verbindung mit Anspruch 1 angegeben. In Verbindung mit dieser Weiterbildung lassen sich auch solche Chip-Module verwenden, die eigentlich nur für einen kontaktbehafteten Betrieb ausgelegt sind. Hier sind alle für den drahtlosen Betrieb notwendigen Hochfrequenz-Funktionen auf Seiten des tragbaren Gegenstands, wie der Uhr, realisiert.

Die von außen zugängliche Aufnahme für die lösbare Halterung des Chip-Moduls am oder im Gehäuse kann in verschiedener Weise ausgebildet sein, z.B. als eine Klemmeinrichtung, in welcher das Chip-Modul festgehalten wird, ggf. in Verbindung mit einer besonderen, angepaßten Form-Gestaltung des Chip-Moduls.

Bevorzugt wird allerdings die Ausbildung der Aufnahme als besonders Fach im Gehäuse gemäß den Ansprüchen 6 bis 10, weil hierbei die Ausbildung des tragbaen Gegenstands, wie der Uhr, und die Handhabung durch den Benutzer besonders einfach sind. Besonders platzsparend und konstruktiv einfach ist ein Fach am Boden des Gehäuses gemäß Anspruch 10.

Wenn der Deckel transparent ist, bleiben optische Identifizierungsmittel am Chip-Modul, z.B. ein Hologramm, auch bei eingesetztem Modul sichtbar und können einfach inspiziert werden.

Gegebenenfalls kann auch noch zweckmäßigerweise in das Gehäuse eingebaut ein Mobiltelefonmodul vorgesehen sein. Hierdurch kann auch eine Mobiltelefonfunktion integriert werden.

Weitere Einzelheiten, Merkmale und Vorteile der Erfindung werden nachstehend an Hand eines bevorzugten Ausführungsbeispiels unter Bezugnahme auf die beigefügte Zeichnung ohne jegliche Beschränkung näher erläutert. Darin zeigt:
- Fig. 1: einen Asseccoir-Gegenstand in Form einer Uhr nach der Erfindung in auseinandergezogener Querschnittsdarstellung,
- Fig. 2: eine Draufsicht in der Ebene des Kontaktmoduls,
- Fig. 3: eine Draufsicht auf das Bodenteil, d.h. des Uhrenbodens bei der bevorzugten Ausführungsform,
- Fig. 4: eine Draufsicht auf das Uhrenglas mit transparentem LC-Display und Touch screen, und
- Fig. 5: eine alternative Ausgestaltungsform eines Aufbau- und Verbindungssystems in Form einer Flachbaugruppe.

Lediglich als eine bevorzugte Ausführungsform soll nachstehend die Erfindung im Zusammenhang mit einer Armbanduhr als Accessoir-Gegenstand näher erläutert werden.

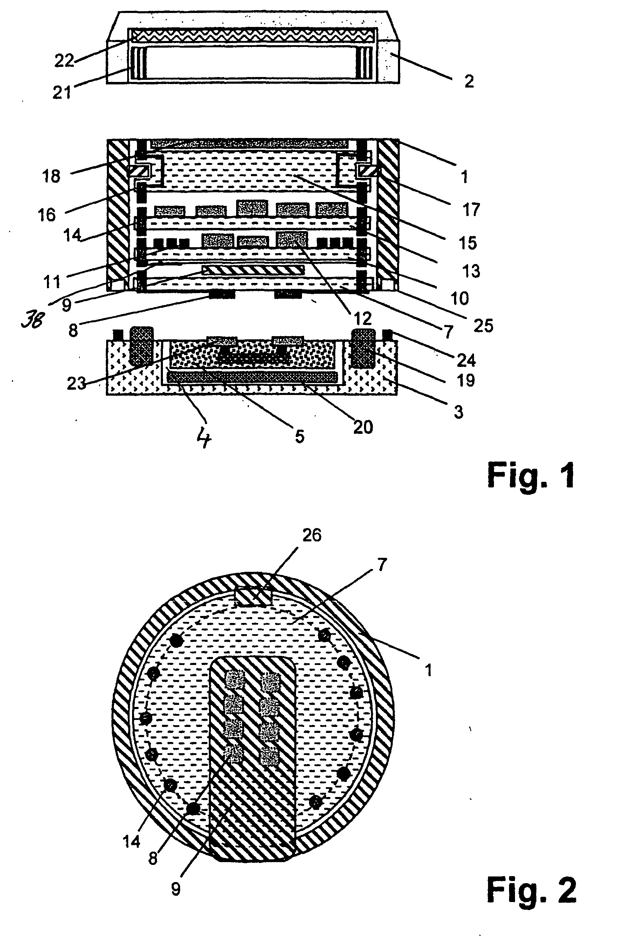

Unter Bezugnahme auf Figur 1 umfaßt eine dort in auseinandergezogener Darstellung verdeutlichte Armbanduhr beispielsweise drei Teile, nämlich ein Uhrwerksgehäuse 1 mit einem Ziffernblatt 18, welches optional als Display oder mit Solarzellen ausgelegt sein kann und ein Einstellrad (Krone) bzw. Taster umfassen kann, einen Uhrenboden 3 und ein Uhrenglas 2. In diesen Teilen werden die zusätzlichen Funktionselemente in einer modularen Aufbauweise untergebracht.

Der Uhrenboden 3 hat eine Aufnahme bzw. Kavität 4, in der eine kontaktbehaftete Miniatur-Chipkarte 5 oder ein Chipmodul mit Kontaktfeld mit genormter Dicke nur so eingelegt werden kann, daß das Kontaktfeld der Chipkarte 5 zum Uhrwerksgehäuse 1 zeigt.

Durch Positionierhilfen wie z. B. Indexloch 25 und Indexstift 24 nach den Figuren 2 bis 4 besitzt die Chipkarte in dem Boden 3 und der Boden 3 zum Uhrwerksgehäuse eine definierte, eindeutige Position. Zur Aufnahme einer kontaktbehafteten Chipkarte 5 oder eines Chipmoduls mit Kontaktfeld wird die Rückseite einer Uhr als Behältnis einer Speicherkarte mit Normdicke von 0.8 mm ausgelegt,

Das Gehäuse bzw. Uhrwerksgehäuse 1 besitzt folgende Funktionselemente und Module:
- Schaltungsfolie 10 mit Kontakten, passend zur vorgesehen Chipkarte 5 und optional mit Antennenaufbau
- Schreib-/Leseelektronik-Modul 13 mit Signalverarbeitungs-IC
- Optional HF-Modul 10 zur kontaktlosen Datenübertragung z.B. mit Bluetooth-Schnittstelle; kann je nach möglicher Miniaturisierung auch Teil des Schreib-Lesemoduls 13 sein
- Uhrwerk 15 mit Batterie
- Zifferblatt 18 mit Solarzellen und Kontakten zum Anzeige- und Bedienmodul in 2
- LCD-Anzeige 27 und Touchscreen 26, vorzugsweise als Teil des Uhrenglases 2

Alle Module werden auf ein oder mehrere Substrate aufgebaut, die z. B. übereinander gestapelt und untereinander mit Druckkontakten elektrisch verbunden werden. Durch diese Aufbauweise kann eine Uhr durch Austausch von Modulen den unterschiedlichen Anforderungen leicht angepaßt werden und eine Reparatur läßt sich auf einfache Weise durchführen.

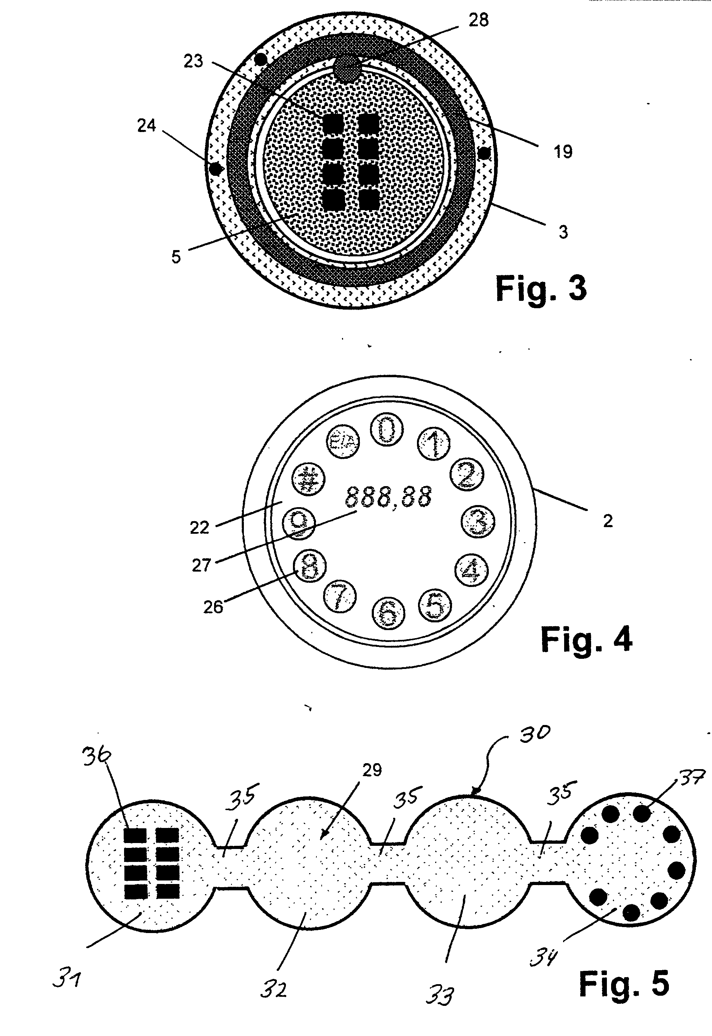

Mit 7 ist ein Modul als Kontaktplatine" vorgesehen, welcher Kontakte 8 hat, die zur Kontaktierung mit der Chipkarte 5 dienen. Im Uhrwerksgehäuse 1 ist eine Abstützung 9 vorgesehen. In den Modulen 7, 10, 13 sind Bus-Kontaktstifte 14 vorhanden. Der Modul 15 hat Bus-Kontaktstifte 16. Zur Modulmontage dient ferner ein Abstützring 17. Mit 19 ist ein Elastomerteil zum Andrücken der Module 7, 10, 13 bezeichnet, und mit 20 ein Elastomerteil zum Andrücken der Chipkarte 5. Mit 21 ist ein Zebra-Leitgummi zur LCD-Kontaktierung bezeichnet. Das Bezugszeichen 22 bezieht sich auf eine LCD-Auslegung in Folientechnik. 23 bezeichnet Chipkartenkontakte. Mit 27 ist das LCD-Anzeigefeld bezeichnet und ferner ist nach Figur 3 ein Indexstift 28 im Uhrenboden 3 für die Chipkarte 5 vorgesehen.

Der Uhrenboden 3 ist mit der Aufnahme bzw. Kavität 4 ausgebildet, in der die Miniatur-Chipkarte 5 auf ein am Boden befindliches Federelement 9 eingelegt werden kann, vorzugsweise ein Elastomerteil 20, wobei die Chipkartenkontakte 23 zum Uhrwerksgehäuse 1 zeigen. Die Lage der Chipkarte 5 im Boden 3 wird z. B. durch eine Nase 28 des Bodens 3 gebildet, die in die entsprechende Aussparung der Chipkarte einrastet. Die Position des Uhrenbodens 3 zum Uhrwerksgehäuse 1 ist wiederum im vorliegendem Beispiel durch Indexstifte 24 im Boden 3 und entsprechende Indexlöcher 25 im Rand des Uhrwerksgehäuses 1 sichergestellt. Damit ist eine positionsgenaue Zuordnung der Chipkartenkontakte 23 zu den Kontakten 8 des Kontaktmoduls 7 gewährleistet.

Das Kontaktmodul 7 weist eine zweiseitig durchkontaktierten flexiblen oder semiflexible Leiterplatte, die umlaufend durch die Platine gehende Kontakte 14 in definiertem Abstand aufweist, wie sie für die anderen Module 10, 13, 15 ebenfalls vorgesehen sind. Durch das Aufsetzen des Uhrenbodens 3 drückt ein im Uhrenboden 3 ringförmig eingebrachtes Federelement, vorzugsweise ein Elastomerring 20, auf die ringförmig angeordneten Kontakte 14 und stellt Busverbindungen zu allen Modulen 7, 10, 13, 15 her.

Eine Alternative zu diesem Aufbau- und Verbindungssystem kann mit Hilfe einer Flachbaugruppe 30 mit flexibler Leiterplatte 29 realisiert werden, wobei die flexible Leiterplatte 29 als Bauteilträger für die einzelnen Module 31, 32, 33, 34 und mit Verbindungsstegen 35 zwischen den Modulbereichen hergestellt wird, wobei der Modulbereich Kontaktplatine" 31 Kontaktflächen 36 zur Kontaktierung mit der Chipkarte 5 und der Modulbereich Uhrwerk" 34 Kontaktflächen 37 für die Kontaktierung mit der LCD-Folie 22 und dem Touchscreen 26 im Uhrenglas 2 aufweist (siehe Fig. 5). Die Flachbaugruppe 30 bzw. die flexible Leiterplatte 29 wird nach dem Bestücken mit elektronischen Komponenten 12 ziehharmonika - förmig gefaltet und in das Gehäuse bzw. Uhrwerksgehäuse 1 gelegt und fixiert.

## Patentansprüche

1. Von einem Anwender bei sich tragbare Vorrichtung zum Realisieren von Hauptfunktionen, wie beispielsweise einer Zeitanzeige, mit
einem Gehäuse (1) zum Unterbringen der zum Ausführen der Hauptfunktionen nötigen Mittel, das eine Anzeigeeinrichtung (2) zum Anzeigen der Hauptfunktionen aufweist, und mit
einem Transponder, der zur Realisierung von Hochfrequenz-Funktionen über eine drahtlose Nachrichtenverbindung und von Zusatzfunktionen, wie beispielsweise einer Zugangskontrolle, eine Chipeinrichtung (5, 7, 10, 13, 15) mit Antenne (11) aufweist,
wobei das Gehäuse (1) eine von außen zugängliche Aufnahme (4) für eine lösbare Halterung der Chipeinrichtung (5, 7, 10, 13, 15) am oder im Gehäuse (1) aufweist,
**dadurch gekennzeichnet, dass**
die Chipeinrichtung (5, 7, 10, 13, 15) folgendes aufweist:
ein Chip-Modul (5), das über eine an ihm vorgesehene Kontaktfläche (23) mit mindestens einem von außerhalb des Gehäuses (1) manuell betätigbaren Schaltelement (26) in elektrischer Wirkverbindung steht und zum Ermöglichen eines Anzeigens der Zusatzfunktionen zusätzlich zu den Hauptfunktionen über eine Kontaktierungsvorrichtung (21, 23) mit der Anzeigeeinrichtung (2) in elektrischer Wirkverbindung steht, und
vom Chip-Modul (5) separat vorgesehene Module (7, 10, 13, 15) mit elektrischen Kontaktelementen (8) zur Kontaktierung mit der Kontaktfläche (23) des Chip-Moduls (5) und somit mit dem manuell betätigbaren Schaltelement (26) und/oder mit der Antenne (11) zur berührungslosen Kontaktierung und/oder mit einer Schreib/Lese-Elektronik (13) zur Funktionsauswertung und/oder mit einem Uhrwerk (15) zur Zeitanzeige, welche Module (7, 10, 13, 15) in die Aufnahme (4) des Gehäuses (1) einbaubar sind und über Bus-Kontaktstifte (14, 16) mit dem eingesetzten Chip-Modul (5) elektrisch verbindbar sind.

2. Vorrichtung nach Anspruch 1, **dadurch gekennzeichnet, dass** eine sichtbare elektronische Anzeige (27) vorgesehen ist, die über mindestens eines der elektrischen Kontaktelemente (8) mit dem eingesetzten Chip-Modul (5) in elektrischer Wirkverbindung steht.

3. Vorrichtung nach Anspruch 2, **dadurch gekennzeichnet, dass** eine Schnittstellenschaltung zwischen den elektrischen Kontaktelementen (8), dem manuell betätigbaren Schaltelement (26) und/oder der elektronischen Anzeige (27) vorgesehen ist.

4. Vorrichtung nach einem der vorangehenden Ansprüche, **dadurch gekennzeichnet, dass** die Antenne (11) des Transponders bei einer Ausgestaltung der Vorrichtung als Uhr in das Zifferblatt (18) der Uhr integriert ist.

5. Vorrichtung nach einem der vorangehenden Ansprüche, **dadurch gekennzeichnet, dass** eine Stromversorgungsquelle für das Uhrwerk (15) gleichzeitig eine Stromversorgungsquelle für alle separat vorgesehenen Module (7, 10, 13, 15) ist, wobei die Stromversorgungsquelle vorzugsweise eine Batterie ist.

6. Vorrichtung nach einem der vorangehenden Ansprüche, **dadurch gekennzeichnet, dass** die von außen zugängliche Aufnahme (4) für eine lösbare Halterung der Chipeinrichtung (5, 7, 10, 13, 15) am oder im Gehäuse (1 ) verschließbar ist.

7. Vorrichtung nach einem der vorangehenden Ansprüche, **dadurch gekennzeichnet, dass** die von außen zugängliche Aufnahme (4) für eine lösbare Halterung der Chipeinrichtung (5, 7, 10, 13, 15) am oder im Gehäuse (1) keine Öffnung zu dem übrigen Raum im Gehäuse (1) hat.

8. Vorrichtung nach einem der vorangehenden Ansprüche, **dadurch gekennzeichnet, dass** die von außen zugängliche Aufnahme (4) für eine lösbare Halterung der Chipeinrichtung (5, 7, 10, 13, 15) am oder im Gehäuse (1) durch eine Öffnung in der Umfangswand des Gehäuses (1) zugänglich ist.

9. Vorrichtung nach Anspruch 8, **dadurch gekennzeichnet, dass** die von außen zugängliche Aufnahme (4) für eine lösbare Halterung der Chipeinrichtung (5, 7, 10, 13, 15) am oder im Gehäuse (1) eine Schublade ist, die im in das Gehäuse (1) eingeschobenen Zustand die Öffnung in der Umfangswand des Gehäuses (1) verschließt.

10. Vorrichtung nach einem der vorangehenden Ansprüche, **dadurch gekennzeichnet, dass** die von außen zugängliche Aufnahme (4) für eine lösbare Halterung der Chipeinrichtung (5, 7, 10, 13, 15) am oder im Gehäuse (1) am Boden des Gehäuses (1) zugänglich und mittels eines Klemm- oder Schraubdeckels verschließbar ist.

11. Vorrichtung nach Anspruch 10, **dadurch gekennzeichnet, dass** der Deckel transparent ist.

12. Vorrichtung nach einem der vorangehenden Ansprüche, **dadurch gekennzeichnet, dass** ein Mobiltelefonmodul (38) leitungsverbindend eingebaut ist.

## Claims

1. A device wearable on the user's person for carrying out principal functions, such as displaying the time, with
an enclosure (1) to accommodate the resources required to carry out the principal functions, with a display device (2) for displaying the principal functions and with
a transponder, which has a:chip device (5, 7, 10, 13, 15) with an antenna (11) for carrying out high-frequency functions and additional functions, such as access entitlement, over a wireless data connection,
whereby the enclosure (1) has an externally-accessible recess (4) for releasable mounting of the chip device (5, 7, 10, 13, 15) on or in the enclosure (1),
**characterised in that**
the chip device (5, 7,10,13,15) has the following:
a chip module (5), which has an active electrical connection provided by a contact surface (23) on the chip module (5) with at least one switch (26) manually operable from outside the enclosure and which has an active electrical connection with the display device (2) through a contacting device (21, 23) to facilitate the display of the supplementary functions in addition to the main functions, and
modules (7, 10, 13, 15) provided separately from the chip module (5) with electrical contact elements (8) for making contact with the contact surface (23) of the chip module (5) and thus with the manually-operable switch (26) and/or with the antenna (11) for proximity contact and/or with an electronic read/write system (13) for function analysis and/or with a clock mechanism (15) for displaying the time, said modules (7, 10, 13, 15) being installable in the recess (4) of the enclosure (1) and electrically connectable with the chip module (5) used by means of bus contact pins (14,16).

2. Device in accordance with claim 1, **characterised in that** a visible electronic display (27) is provided, which has an active electrical connection through at least one of the electrical contact elements (8) with the chip module (5) used.

3. Device in accordance with claim 2, **characterised in that** an interface circuit is provided between the electrical contact elements (8),the manually-operable switch (26) and/or the electronic display (27).

4. Device in accordance with one of the above claims, **characterised in that** the antenna (11) of the transponder is integrated into the face (18) of the watch in an embodiment of the device as a watch.

5. Device in accordance with one of the above claims, **characterised in that** an electrical power source for the clock mechanism (15) is simultaneously an electrical power source for all the modules (7, 10, 13, 15) provided separately, the electrical power source preferably being a battery.

6. Device in accordance with one of the above claims, **characterised in that** the externally-accessible recess (4) for releasable mounting of the chip device (5, 7, 10, 13,15) on or in the enclosure (1) may be closed.

7. Device in accordance with one of the above claims, **characterised in that** the externally-accessible recess (4) for a releasable mounting for the chip device (5, 7, 10, 13,15) on or in the enclosure (1) has no aperture communicating with the remaining space in the enclosure (1).

8. Device in accordance with one of the above claims, **characterised in that** the externally-accessible recess (4) for a releasable mounting of the chip device (5, 7, 10, 13, 15) on or in the enclosure (1) is accessible through an aperture in the circumferential wall of the enclosure.

9. Device in accordance with claim 8, **characterised in that** the externally-accessible recess (4) for a releasable mounting of the chip device (5, 7, 10, 13, 15) on or in the enclosure (1) is a drawer which closes the aperture in the circumferential wall of the enclosure (1) when pushed in to the enclosure (1).

10. Device in accordance with one of the above claims, **characterised in that** the externally-accessible recess (4) for a releasable mounting of the chip device (5, 7, 10, 13,15) on or in the enclosure (1) is accessible on the base of the enclosure (1) and closable by a bayonet or screw cover.

11. Device in accordance with claim 10, **characterised in that** the cover is transparent.

12. Device in accordance with one of the above claims, **characterised in that** a mobile telephone module (38) is installed with a conductive connection.

## Revendications

1. Dispositif permettant de réaliser des fonctions principales, telles que l'affichage de l'heure par exemple, que l'utilisateur peut porter sur soi, comprenant un boîtier (1) pour abriter tous les moyens nécessaires à l'exécution des fonctions principales, qui présente un dispositif d'affichage (2) pour afficher les fonctions principales, ainsi qu'un transpondeur qui présente un dispositif à puce (5, 7, 10, 13, 15) avec une antenne (11) pour réaliser des fonctions à haute fréquence par l'intermédiaire d'une ligne de télécommunication sans fil, ainsi que des fonctions accessoires, telle qu'un contrôle d'accès par exemple, le boîtier (1) présentant un logement (4) accessible de l'extérieur recevant une fixation amovible du dispositif à puce (7, 7, 10, 13, 15) sur ou dans le boîtier (1), **caractérisé en ce que** le dispositif à puce (5, 7, 10, 13, 15) présente un module à puce (5), qui est relié, de manière à pouvoir être actionné électriquement, à au moins un élément de commande (26) actionnable manuellement depuis l'extérieur du boîtier (1), par l'intermédiaire d'une surface de contact (23) prévue sur le module à puce (5) et qui est reliée, de manière à pouvoir être actionné électriquement, au dispositif d'affichage (2) par l'intermédiaire d'un dispositif d'établissement de contact pour permettre l'affichage des fonctions accessoires en plus des fonctions principales, et **en ce qu'**il présente des modules (7, 10, 13, 15) prévus séparément du module à puce (5) avec des éléments de contact électriques (8) pour l'établissement d'un contact avec la surface de contact (23) du module à puce (5) et, par conséquent, avec l'élément de commande (26) actionnable manuellement et/ou avec l'antenne (11) pour l'établissement d'un contact sans contact direct et/ou avec une électronique d'écriture/de lecture (13) pour l'évaluation des fonctions et/ou avec un mouvement d'horlogerie (15) pour l'affichage de l'heure, lesquels modules (7, 10, 13, 15) peuvent être intégrés dans le logement (4) du boîtier (1) et reliés électriquement au module à puce (5) inséré par l'intermédiaire de pointes de contact de bus.

2. Dispositif selon la revendication 1, **caractérisé en ce qu'**est prévu un affichage électronique visible (27), qui est relié électriquement au module à puce (5) inséré par l'intermédiaire d'au moins un des éléments de contact électriques (8).

3. Dispositif selon la revendication 2, **caractérisé en ce qu**'un circuit d'interface est prévu entre les éléments de contact électriques (8), l'élément logique (26) actionnable manuellement et/ou l'affichage électronique (27).

4. Dispositif selon l'une des revendications précédentes, **caractérisé en ce que** l'antenne (11) du transpondeur est intégrée dans le cadran (18) de la montre lorsque le dispositif est conçu comme une montre.

5. Dispositif selon l'une des revendications précédentes, **caractérisé en ce qu**'une source d'alimentation en courant électrique pour le mécanisme d'horlogerie (15) est en même temps une source d'alimentation en courant électrique pour les modules (7, 10, 13, 15) prévus séparément, la source d'alimentation en courant électrique étant de préférence une pile.

6. Dispositif selon l'une des revendications précédentes, **caractérisé en ce que** le logement (4) accessible depuis l'extérieur et recevant une fixation amovible du dispositif à puce (5, 7, 10, 13, 15) sur ou dans le boîtier (1), peut être fermé.

7. Dispositif selon l'une des revendications précédentes, **caractérisé en ce que** le logement (4) accessible depuis l'extérieur et recevant une fixation amovible du dispositif à puce (5, 7, 10, 13, 15) sur ou dans le boîtier (1), n'a pas d'ouverture donnant sur le reste de l'espace dans le boîtier (1).

8. Dispositif selon l'une des revendications précédentes, **caractérisé en ce que** le logement (4) accessible depuis l'extérieur et recevant une fixation amovible du dispositif à puce (5, 7, 10, 13, 15) sur ou dans le boîtier (1), est accessible à travers une ouverture dans la paroi circonférentielle du boîtier (1).

9. Dispositif selon la revendication 8, **caractérisé en ce que** le logement (4) accessible depuis l'extérieur et recevant une fixation amovible du dispositif à puce (5, 7, 10, 13, 15) sur ou dans le boîtier (1) est un tiroir qui, à l'état rentré dans le boîtier (1), ferme l'ouverture dans la paroi circonférentielle du boîtier (1).

10. Dispositif selon l'une des revendications précédentes, **caractérisé en ce que** le logement (4) accessible depuis l'extérieur et recevant une fixation amovible du dispositif à puce (5, 7, 10, 13, 15) sur ou dans le boîtier (1), est accessible au niveau du fond du boîtier (1) et peut être fermé au moyen d'un couvercle de serrage ou d'un couvercle fileté.

11. Dispositif selon la revendication 10, **caractérisé en ce que** le couvercle est transparent.

12. Dispositif selon l'une des revendications précédentes, **caractérisé en ce qu'**un module de téléphone mobile (38) est monté de manière à permettre la connexion de lignes.
